# EUROPEAN PATENT APPLICATION

(11) **EP 3 514 366 A1**
(43) Date of publication of application: **24.07.2019**
(21) Application number: 17868341.3
(22) Date of filing: 25.10.2017
(51) Int. Cl.: F02M 35/10, F02B 29/04, F02M 26/19, F02M 35/104

(54) **INTAKE DEVICE FOR MULTI-CYLINDER ENGINE**

(30) Priority: 04.11.2016 JP 2016216317
(71) Applicant: Mazda Motor Corporation, Aki-gun, Hiroshima 730-8670 (JP)
(72) Inventor: TANAKA, Fusatoshi, Aki-gun Hiroshima 730-8670 (JP); KADOISHI, Takao, Aki-gun Hiroshima 730-8670 (JP); HACHIYA, Nozomu, Aki-gun Hiroshima 730-8670 (JP)
(74) Representative: Müller-Boré & Partner Patentanwälte PartG mbB
(86) International application number: PCT/JP2017/038464
(87) International publication number: WO 2018/084042

(57) **Abstract**

An intake device for a multi-cylinder engine includes an intake manifold, an intercooler, and a heat insulation member. The intake manifold has an intercooler housing that is a cylindrical body formed from a resin material and internally accommodates the intercooler; and an intake air distributor that is a cylindrical body formed of a metal material and has one opening connected to one opening of the intercooler housing, the intake air distributor distributing an intake air. The heat insulation member is interposed between another opening of the intake air distributor and the cylinder head in the multi-cylinder engine.

## Description

### Technical Field

The present disclosure relates to an intake device for a multi-cylinder engine.

### Background Art

Intake devices have been studied and developed in which an intercooler is accommodated in an intake manifold in order to reduce a size of an engine system and simplify an intake system layout (Patent Literature 1).

An intake manifold disclosed in Patent Literature 1 includes a main body, an upper cover, a lower cover, and a shell. In a configuration of the intake manifold, the main body, the upper cover, and the lower cover are formed from resin materials. The shell is formed of a metal material.

In the intake manifold disclosed in Patent Literature 1, an intercooler is accommodated in the main body. Patent Literature 1 discloses that the shell is joined to a bottom surface of the lower cover to serve as a reinforcing material which prevents deterioration of strength of the resin material under a high temperature.

### Citation List

### Patent Literature

Patent Literature 1: Japanese Unexamined Patent Publication No. 2016-125369

### Summary of Invention

However, with the above technique disclosed in Patent Literature 1, parts of the intake manifold excluding the shell are formed from resin materials to raise a concern that an attachment part to a cylinder head of an engine may lack in supporting rigidity.

Specifically, in the intake manifold disclosed in Patent Literature 1, a branch part as the attachment part to the cylinder head of the engine is formed by welding the main body formed from a resin material and the upper cover similarly formed from a resin material, and the intercooler accommodated in the main body is a heavy load to be supported by the branch part formed from a resin material.

Thus, the intake manifold disclosed in Patent Literature 1 has a concern that the attachment part to the cylinder head of the engine lacks in supporting rigidity.

An object of the present disclosure, which intends to solve such a problem as described above, is to provide an intake device for a multi-cylinder engine which suppresses a weight increase while accommodating an intercooler, and which ensures high supporting rigidity of an attachment part to a cylinder head of the multi-cylinder engine.

An intake device for a multi-cylinder engine according to one aspect of the present disclosure includes: an intake manifold attached to a cylinder head of the multi-cylinder engine; an intercooler accommodated in the intake manifold to cool an intake air; and a heat insulation member interposed between the intake manifold and the cylinder head in the multi-cylinder engine.

The intake manifold includes an intercooler housing that is a cylindrical body formed from a resin material and internally accommodates the intercooler, and an intake air distributor that is a cylindrical body formed of a metal material and has one opening connected to one opening of the intercooler housing, the intake air distributor distributing the intake air.

The heat insulation member is interposed between another opening of the intake air distributor and the cylinder head in the multi-cylinder engine.

### Brief Description of Drawings

FIG. 1 is a schematic side view showing a multi-cylinder engine and an intake device according to an embodiment.
FIG. 2 is a schematic plan view showing a configuration of the intake device.
FIG. 3 is a schematic developed view showing the configuration of the intake device.
FIG. 4 is a schematic sectional view showing an air flow in the intake device.
FIG. 5 is a schematic front view showing a configuration of a metal cylindrical body in an intake manifold.
FIG. 6 is a schematic sectional view, in a section taken along VI-VI in FIG. 2, showing an internal configuration of the intake manifold.
FIG. 7 is a schematic sectional view, in a section taken along VII-VII in FIG. 2, showing the internal configuration of the intake manifold.
FIG. 8 is a schematic sectional view, in a section taken along VIII-VIII in FIG. 2, showing the internal configuration of the intake manifold.
FIG. 9 is a schematic sectional view, in a section taken along IX-IX- in FIG. 2, showing the internal configuration of the intake manifold.

### Description of Embodiments

In the following, an embodiment will be described with reference to the drawings. The embodiment to be described below is one aspect of the present disclosure, and the present disclosure is not limited to the embodiment set forth below except for a substantial configuration thereof.

### [Embodiment]

### 1. Multi-Cylinder Engine 1 and Intake Device 2

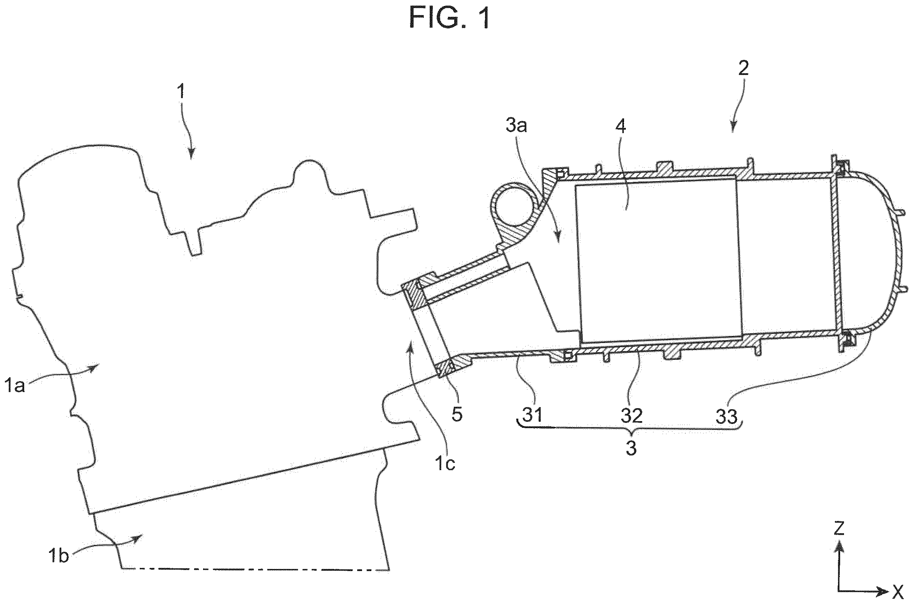

Schematic configurations and arrangement modes of a multi-cylinder engine 1 and an intake device 2 according to the present embodiment will be described with reference to FIG. 1.

As shown in FIG. 1, the multi-cylinder engine 1 has a cylinder head 1a arranged on the upper side in a Z direction, and a cylinder block 1b attached under the cylinder head 1a. In the multi-cylinder engine 1, a plurality of cylinders are arranged in a direction vertical to the plane of the sheet of FIG. 1. In other words, the direction vertical to the plane of the sheet of FIG. 1 is a direction of a cylinder row of the multi-cylinder engine 1.

The intake device 2 is attached to the cylinder head 1a. The intake device 2 is equipped with an intake manifold 3, an intercooler 4, and a heat insulation member 5.

The intake manifold 3 has a metal cylindrical body 31 that is a cylindrically-shaped body formed of a metal material, a resin cylindrical body 32 that is a cylindrically-shaped body formed from a resin material, and a back cover 33 attached on the right side of the resin cylindrical body 32 in an X direction. The metal cylindrical body 31 is provided as an intake air distributor which distributes an intake air to each intake air port 1c of the multi-cylinder engine 1.

The intercooler 4 is accommodated in the resin cylindrical body 32 of the intake manifold 3. Specifically, the resin cylindrical body 32 is provided as an intercooler accommodating body. The intercooler 4, although detailed illustration thereof is omitted, has a plurality of cooling fins along a direction of a flow of an intake air.

The heat insulation member 5 is interposed between the cylinder head 1a and the metal cylindrical body 31 of the intake manifold 3 in order to suppress heat transmission from the cylinder head 1a to the intake manifold 3. This makes an intake air path 3a in the intake manifold 3 and each intake air port 1c of the multi-cylinder engine 1 communicate with each other through an opening of the heat insulation member 5.

The heat insulation member 5 is configured to have a thermal conductivity lower than that of at least the metal cylindrical body 31.

While the intake manifold 3 is attached to the cylinder head 1a of the multi-cylinder engine 1, a bottom surface of the metal cylindrical body 31 gradually inclines downward in a vertical direction (the Z direction) from a part of the resin cylindrical body 32 where the intercooler 4 is accommodated toward an end of the metal cylindrical body 31 on the cylinder head 1b side. This, when the multi-cylinder engine 1 stops, causes condensed water (water generated due to dew condensation) generated on a top surface of the intercooler 4 not to remain in the intake manifold 3 but to be discharged to each intake air port 1c of the multi-cylinder engine 1.

### 2. Detailed Configuration of Intake Device 2

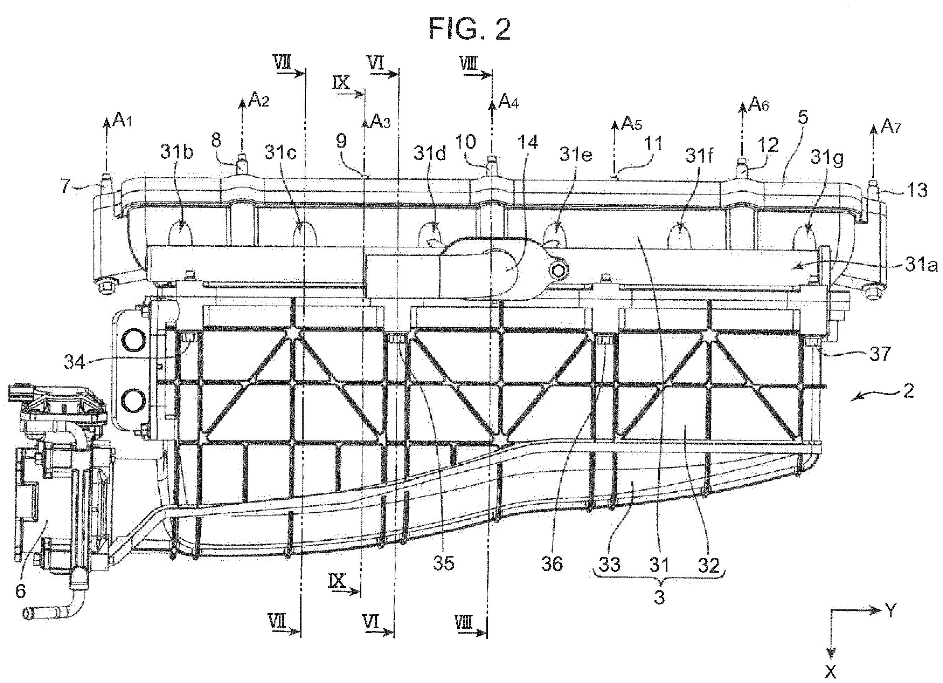

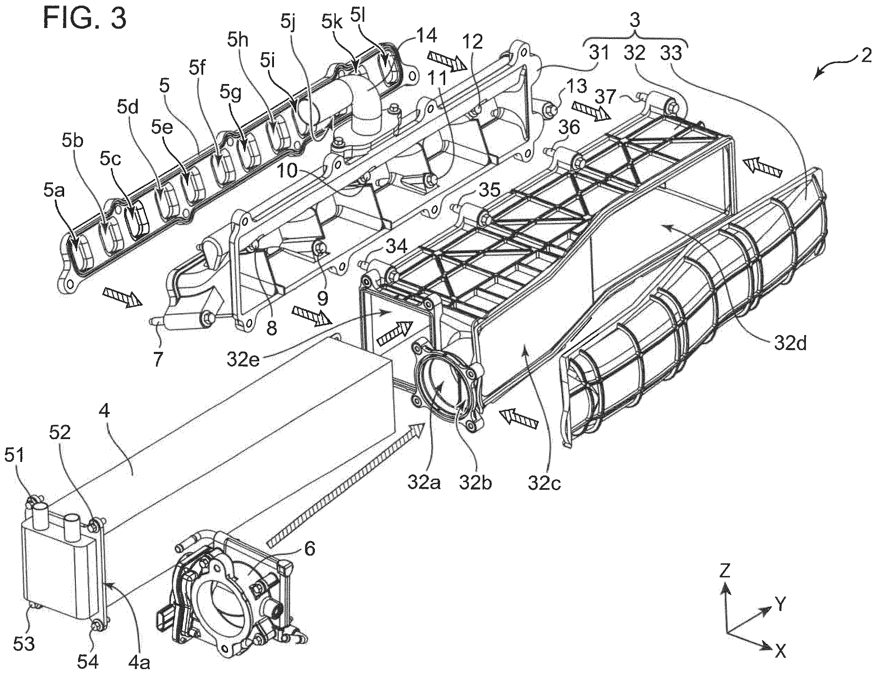

Detailed configuration of the intake device 2 will be described with reference to FIG. 2 and FIG. 3. FIG. 2 is a schematic plan view of the intake device 2 viewed from the upper side in the Z direction, and FIG. 3 is a schematic developed view showing developed components of the intake device 2.

As shown in FIG. 2 and FIG. 3, a throttle valve 6 is attached to a part of the resin cylindrical body 32 on a side opposite to a side of the connection with the metal cylindrical body 31. The throttle valve 6 is a valve for controlling a flow rate of an intake air to the intake manifold 3.

Also as shown in FIG. 2, the metal cylindrical body 31 of the intake manifold 3 is provided with an EGR (Exhaust Gas Recirculation) pipe 14. This causes a part of an exhaust gas to pass through the metal cylindrical body 31 of the intake manifold 3 to flow back to the multi-cylinder engine 1.

The metal cylindrical body 31 is integrally provided with an EGR distribution pipe 31a extending from a part of connection with the EGR pipe 14 toward both sides in an Y direction, and a plurality of EGR branch pipes 31b, 31c, 31d, 31e, 31f, and 31g branching from the EGR distribution pipe 31a to extend to the heat insulation member 5 side in the X direction. In the metal cylindrical body 31 according to the present embodiment, the EGR distribution pipe 31a is provided as an EGR distribution path.

Here, the EGR branch pipes 31b, 31c, 31d, 31e, 31f, and 31g enable the returned exhaust gas to be supplied to the metal cylindrical body 31 downstream of the resin cylindrical body 32 in the flow of the intake air, the resin cylindrical body 32 accommodating the intercooler 4.

The metal cylindrical body 31 of the intake manifold 3 and the heat insulation member 5 are jointly fastened to the cylinder head 1a of the multi-cylinder engine 1 (see FIG. 1) by seven bolts 7 to 13 as first fastening members. The bolts 7 to 13 are inserted through the heat insulation member 5 in a thickness direction as indicated by arrows A₁ to A₇ and screw-fastened around the intake air ports 1c of the cylinder head 1a.

In the intake manifold 3, the metal cylindrical body 31 and the resin cylindrical body 32 are fixed to each other by eight bolts 34 to 41 as second fastening members (in FIG. 2 and FIG. 3, only the four bolts 34 to 37 are shown for the convenience of illustration).

As shown in FIG. 3, in a right side end of the resin cylindrical body 32 in the X direction, generally a half the length in the Y direction, is covered with a dividing wall 32c and generally a remaining half the length is opened as an intake air path 32d. Then, the back cover 33 is joined to the resin cylindrical body 32 so as to cover the dividing wall 32c and the intake air path 32d of the resin cylindrical body from the right side in the X direction.

The resin cylindrical body 32 is provided with three openings 32a, 32b, and 32e in a frontward end in the Y direction. Of these openings, the throttle valve 6 is attached to a part in which the openings 32a and 32b are provided.

On the other hand, from the opening 32e opened to be rectangular when viewed from the side in the Y direction, the intercooler 4 is inserted. The intercooler 4 has a columnar external shape extending in the Y direction (a direction of the cylinder row). Then, the resin cylindrical body 32 and the intercooler 4 are fixed to each other by the bolts 51 to 54 as a result of contacting of the flange 4a of the intercooler 4 with side walls on the periphery of the opening 32e in the resin cylindrical body 32.

As shown in FIG. 3, the heat insulation member 5 is provided with a plurality of openings 5a to 51 arranged in the Y direction. In the present embodiment, a six-cylinder diesel engine is adopted as one example of a multi-cylinder engine 1. Then, in the heat insulation member 5, two each of opening 5a and 5b, 5c and 5d, 5e and 5f, 5g and 5h, 5i and 5j, and 5k and 51 are provided for the respective cylinders in the multi-cylinder engine 1.

The openings 5a and 5b, 5c and 5d, 5e and 5f, 5g and 5h, 5i and 5j, and 5k and 51 function as connection paths which connect the metal cylinder 31 and the intake air ports 1c of the cylinder head 1a.

Here, in the intake manifold 3, the metal cylindrical body 31 has a width in the Y direction larger than a width in the Y direction of the resin cylindrical body 32 as shown in FIG. 2 and FIG. 3.

### 3. Air Flow In Intake Device 2

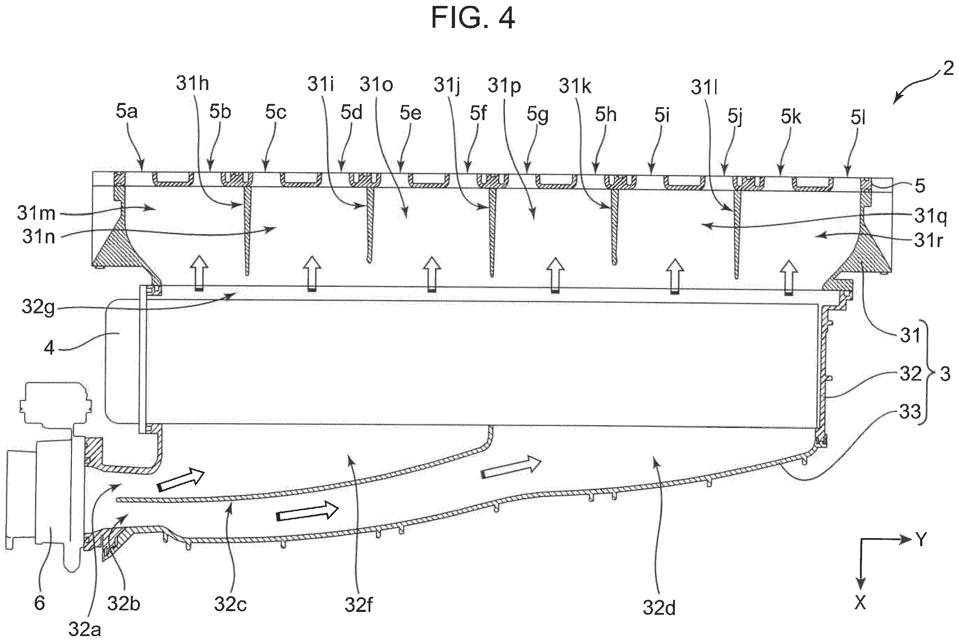

An air flow in the intake device 2 will be described with reference to FIG. 4. FIG. 4 is a schematic sectional view showing an air flow in the intake device 2.

As shown in FIG. 4, air introduced into the resin cylindrical body 32 from the openings 32a and 32b through the throttle valve 6 is divided into two of the intake air path 32d and the intake air path 32f divided by the dividing wall 32c.

The air flowing through the intake air path 32d and the intake air path 32f passes through the intercooler 4 to be cooled. The intercooler 4 has the plurality of fins arranged along the X direction, although not illustrated, and the air passes between the plurality of fins. Then, at this time, heat is absorbed through the fins.

The air having passed through the intercooler 4 flows from the intake air path 32g in the resin cylindrical body 32 into the metal cylindrical body 31.

Here, the metal cylindrical body 31 is provided therein with five partition walls 31h to 311 which extend in the X direction and are arranged to be spaced apart from each other. By the disposition of the partition walls 31h to 311, the metal cylindrical body 31 is internally zoned into the six intake air paths 31m to 31r. The six intake air paths 31m to 31r, however, are not completely sectioned from each other but have some parts communicating with each other.

Additionally, the six intake air paths 31m to 31r correspond to the respective cylinders of the multi-cylinder engine 1 and also correspond to the paired openings 5a and 5b, 5c and 5d, 5e and 5f, 5g and 5h, 5i and 5j, and 5k and 51 in the heat insulation member 5.

Accordingly, air having passed through the intake air paths 31m to 31r passes the openings 5a and 5b, 5c and 5d, 5e and 5f, 5g and 5h, 5i and 5j, and 5k and 51 as the connection paths to be supplied to the intake air port 1c of each cylinder in the multi-cylinder engine 1.

### 4. Opening Positions of EGR Branch Pipes 31b to 31g Formed in Metal Cylindrical Body 31

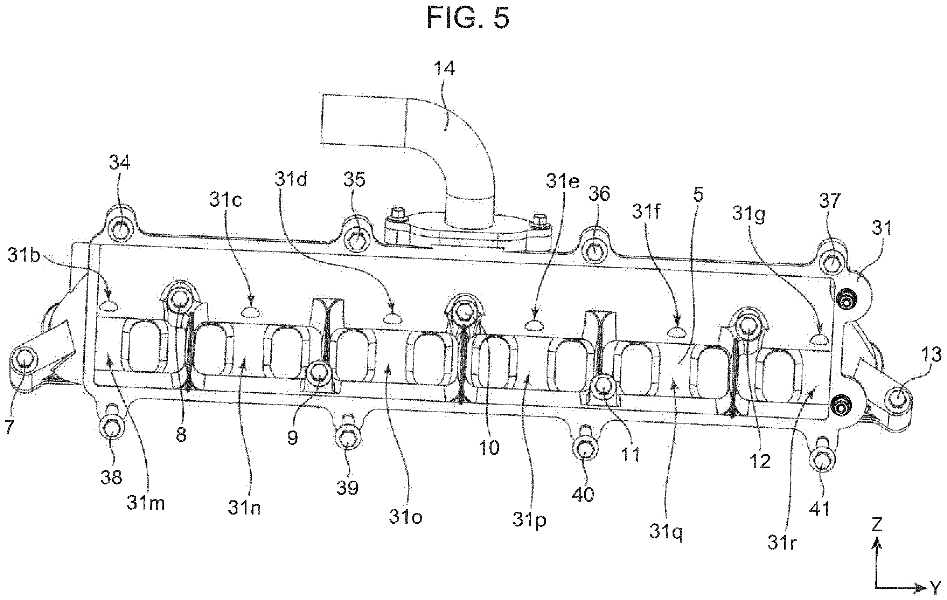

Description will be made of openings of the EGR branch pipes 31b to 31g formed in the metal cylindrical body 31 with reference to FIG. 5. FIG. 5 is a schematic front view of the metal cylindrical body 31 viewed from the side of a joint with the resin cylindrical body 32.

As shown in FIG. 5, the EGR branch pipes 31b to 31g are opened to be spaced apart from each other in the metal cylindrical body 31. The openings of the respective EGR branch pipes 31b to 31g are arranged at generally center parts of the intake air paths 31m to 31r in the Y direction, respectively.

The openings of the respective EGR branch pipes 31b to 31g are arranged on the heat insulation member 5 side in a cylinder shaft direction (the direction vertical to the plane of the sheet) in the metal cylindrical body 31.

### 5. Internal Configuration of Intake Manifold 3

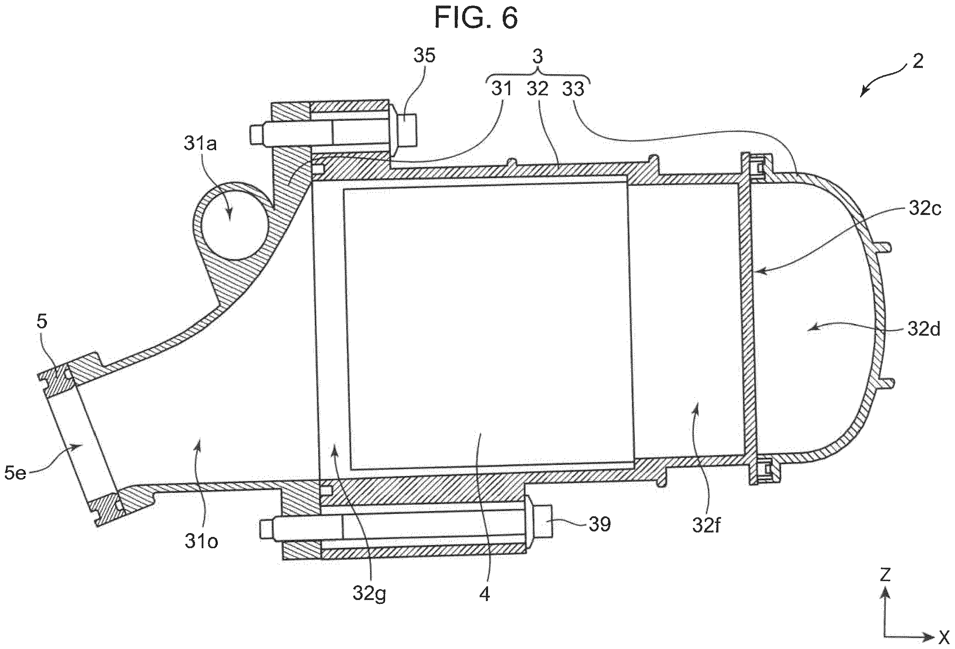

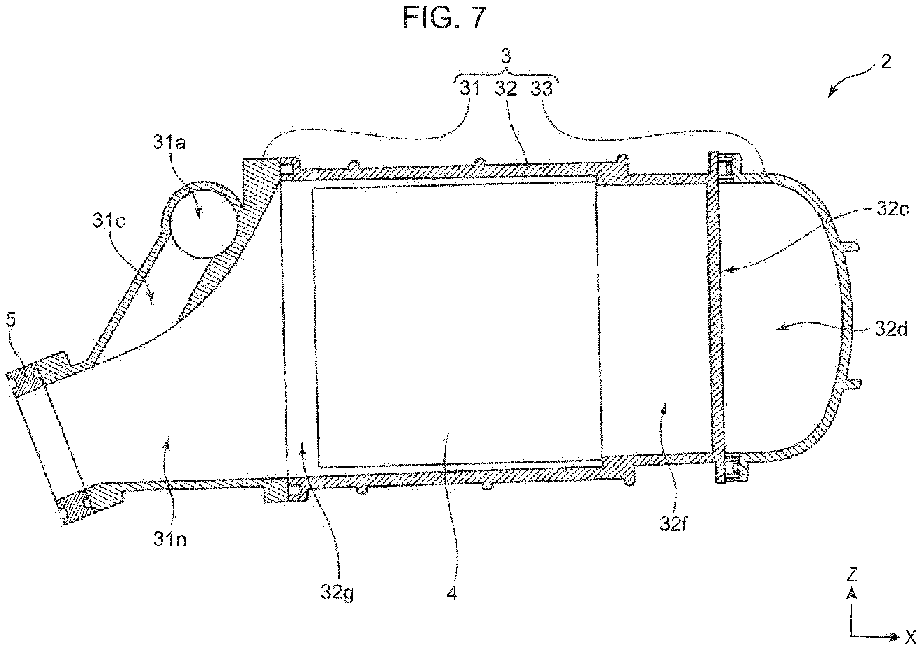

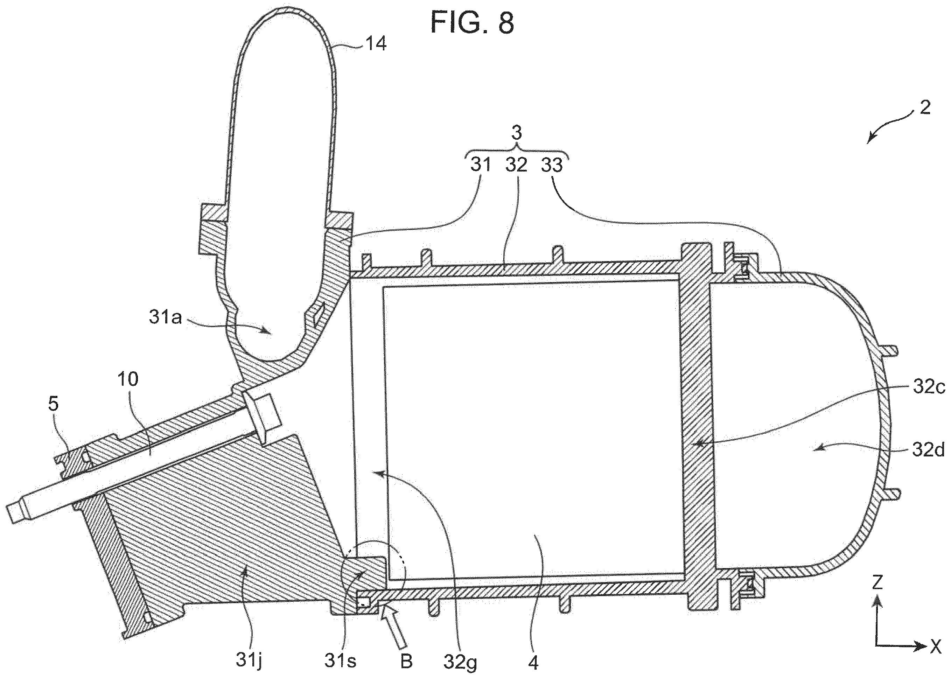

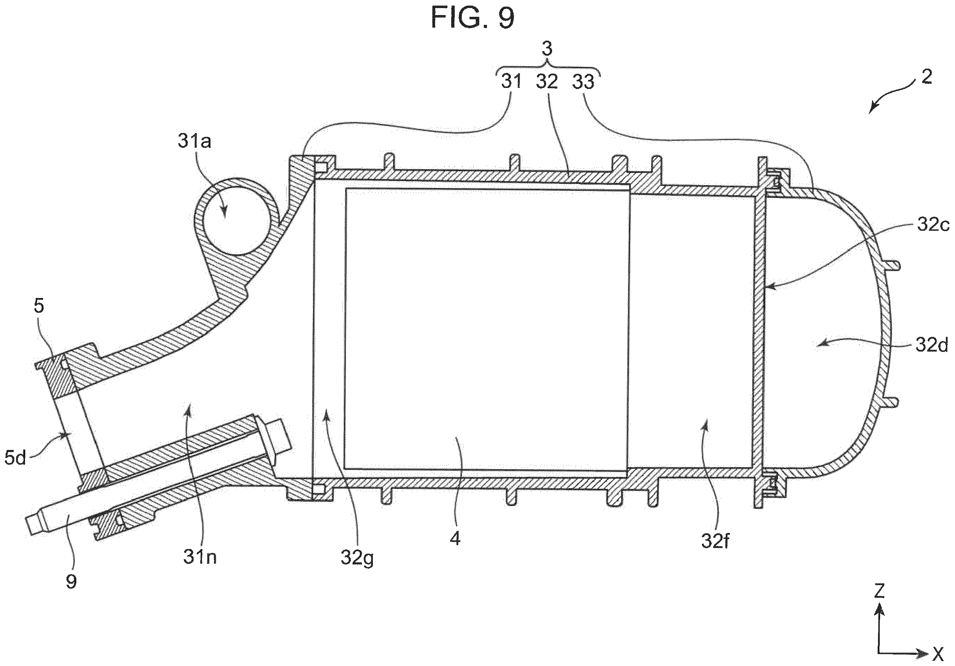

An internal configuration of the intake manifold 3 will be described with reference to FIG. 6 to FIG. 9. FIG. 6 shows a section taken along VI-VI in FIG. 2, FIG. 7 shows a section taken along VII-VII in FIG. 2, FIG. 8 shows a section taken along VIII-VIII in FIG. 2, and FIG. 9 shows a section taken along IX-IX in FIG. 2.

First, as shown in FIG. 6, the metal cylindrical body 31 has a height in the Z direction of an inner space thereof decreasing from the right side of the intake air path 31o in the X direction toward the left side. In other words, the inner space of the metal cylindrical body 31 has an opening cross section area gradually decreasing from a connection part with the resin cylindrical body 32 on the right side in the X direction toward a connection part with the heat insulation member 5 on the left side in the X direction.

Also as shown in FIG. 6, in the metal cylindrical body 31, the EGR distribution pipe 31a is adjacent to the intake air path 31o with a thick part of the metal cylindrical body 31 provided therebetween. Since the part between the EGR distribution pipe 31a and the intake air path 31o is also formed of a metal material, heat of an exhaust gas flowing in the EGR distribution pipe 31a is cooled also by air flowing in the intake air path 31o.

The configuration shown in FIG. 6 is the same as those of the intake air paths 31m, 31n, 31p, 31q, and 31r.

Additionally, as shown in FIG. 6, the metal cylindrical body 31 and the resin cylindrical body 32 are fixed by fastening the bolts 35 and 39 at upper and lower sides in the Z direction. Here, a length of the bolt 35 used for fastening the upper side in the Z direction is smaller than a height of the bolt 39 used for fastening the lower side. The height of the bolt 35 used for fastening the upper side can be set to be the same as that of the bolt 39 used for fastening the lower side.

As to a length of insertion of each of the bolts 35 and 39, the resin cylindrical body 32 is set to have a larger insertion length than that of the metal cylindrical body 31. This is for suppressing stress on the bolts 35 and 39 to be small in the resin cylindrical body 32 where the intercooler 4 as a heavy load is accommodated.

This is also the case with insertion positions of other bolts 34, 36 to 38, 40, and 41 which fix the metal cylindrical body 31 and the resin cylindrical body 32.

Next, as shown in FIG. 7, the EGR branch pipe 31c branching from the EGR distribution pipe 31a is formed not to extend along the Z direction but to extend obliquely in the Z direction so as to be angled toward the left side in the X direction. This enables the opening of the EGR branch pipe 31c to be located away from the intercooler 4. This makes it difficult to transmit heat of an exhaust gas to the intercooler 4 and to air passing through the intercooler 4.

Additionally, as shown in FIG. 7, obliquely extending the EGR branch pipe 31c to merge with the intake air path 31n makes it difficult to generate irregular air and exhaust gas flows (turbulence).

Also, as shown in FIG. 7, in a case where an extension direction of the EGR branch pipe 31c is expanded, the expanded part is included in the opening of the metal cylindrical body 31 on the side of joint with the heat insulation member 5. Specifically, at the time of processing the EGR branch pipe 31c, a blade of a drill is allowed to enter through the opening on the left side of the metal cylindrical body 31 in the X direction. Accordingly, the configuration of the metal cylindrical body 31 according to the present embodiment facilitates manufacture to have an advantage in reducing manufacturing costs.

The foregoing is also the case with other EGR branch pipes 31b, and 31d to 31g in the metal cylindrical body 31.

Next, as shown in FIG. 8 and FIG. 9, the bolts 9 and 10 for attaching the intake manifold 3 to the cylinder head 1a of the multi-cylinder engine 1 are arranged on the inner space side of the metal cylindrical body 31. The bolts 9 and 10 are inserted through the metal cylindrical body 31 and the heat insulation member 5 to be screw-fastened around each intake air port 1c of the cylinder head 1a.

This is also the case with other bolts 7, 8, and 11 to 13 for use in attaching the intake manifold 3 to the cylinder head 1a.

Next, like a part indicated by an arrow B in FIG. 8, the partition wall 31j provided in the metal cylindrical body 31 has a part of a lower part in the Z direction protruding to the right side in the X direction (a lower projection 31s). The lower projection 31s of the partition wall 31j in the metal cylinder 31 has a front end entering the resin cylindrical body 32. Then, the front end of the lower projection 31s is adjacent to a left end of the intercooler 4 in the X direction.

This is also the case with the partition walls 31h and 311 provided in the metal cylindrical body 31.

### 6. Effects

In the present embodiment, since the intercooler 4 is accommodated in the cylinder of the resin cylindrical body 32 in the intake manifold 3, intake air can be cooled while reducing a size of the engine system and simplifying an intake system layout.

Additionally, in the present embodiment, since the resin cylindrical body 32 is used as a part of the components forming the intake manifold 3, weight and manufacturing costs can be reduced more than in a case where the entire intake manifold is formed of a metal material.

Also in the present embodiment, the metal cylindrical body 31 is used as a part of the components forming the intake manifold 3, and the metal cylindrical body 31 is disposed on the side of the attachment to the cylinder head 1a of the multi-cylinder engine 1. Therefore, even when a weight is increased due to accommodation of the intercooler 4, high supporting rigidity can be ensured for the cylinder head 1a.

Also in the present embodiment, the heat insulation member 5 is interposed between the cylinder head 1a of the multi-cylinder engine 1 and the metal cylindrical body 31 of the intake manifold 3, it is possible to suppress transmission of heat from the cylinder head 1a to the intake manifold 3, thereby suppressing a temperature increase of an intake air.

Accordingly, the intake device 2 according to the present embodiment enables a weight increase to be suppressed while accommodating the intercooler 4 in the intake manifold 3, and also enables high supporting rigidity to be ensured at the attachment part to the cylinder head 1a of the multi-cylinder engine 1.

Also in the present embodiment, since the intercooler 4 is configured to have a columnar external shape extending in the direction of the cylinder row (the Y direction) of the multi-cylinder engine 1, the intercooler 4 as a heavy load can be arranged at a part near the cylinder head 1a as a supporter, thereby suppressing a stress on the cylinder head 1a to be small.

Additionally, since the present embodiment adopts such an arrangement mode of the intercooler 4 as described above, a large contact area in the connection part between the resin cylindrical body (intercooler housing) 32 and the metal cylindrical body (intake air distributor) 31 can be ensured to suppress local heat input.

Also in the present embodiment, since the metal cylindrical body 31 and the heat insulation member 5 are jointly fastened to the cylinder head 1a by the bolts 7 to 13 that are the first fastening members, high supporting rigidity with respect to the cylinder head 1a can be realized while reducing the number of the bolts 7 to 13.

Additionally, in the present embodiment, since the metal cylindrical body 31 of the intake manifold 3 is provided with the EGR paths (the EGR distribution pipe 31a and the EGR branch pipes 31b to 31g) for returning the exhaust gas into the inner space of the metal cylindrical body 31, suppressing an excess increase of a combustion gas temperature enables generation of a nitrogen oxide (NOx) to be suppressed, as well as reducing a pumping loss during air intake.

Also in the present embodiment, since the openings of the EGR branch pipes 31b to 31g are provided in the metal cylindrical body 31 downstream of the resin cylindrical body 32 in the flow of air, the resin cylindrical body 32 accommodating the intercooler 4, it is possible to prevent solid matters (soot etc.) contained in the exhaust gas from clogging the intercooler 4.

Also in the present embodiment, since the EGR distribution pipe 31a and the EGR branch pipes 31b to 31g are provided in the metal cylindrical body 31, the number of parts can be reduced and a layout of the intake device 2 and around the same can be simplified.

Additionally, in the present embodiment, forming the tube walls of the EGR distribution pipe 31a and the EGR branch pipes 31b to 31g with metal materials can accelerate reduction in an exhaust gas temperature. Accordingly, a volume of an exhaust gas can be reduced to suppress reduction in air filling efficiency and a loss of a NOx reduction effect caused by EGR.

Also, in the present embodiment, since the resin cylindrical body 32 is provided with the dividing wall 32c to space the intake air path 32d and the intake air path 32f from each other, intake air distribution performance can be more excellent. Further, disposition of the dividing wall 32c in the resin cylindrical body 32 enables rigidity of the resin cylindrical body 32 to be improved.

Additionally, in the present embodiment, since the back cover 33 is attached to the back side of the resin cylindrical body 32 (on the right side in the X direction in FIG. 3), rigidity of the resin cylindrical body 32 can be further increased. Further, attaching the back cover 33 as a separate body to the resin cylindrical body 32 enables the structure of the resin cylindrical body 32 to be simplified and enables reduction in manufacturing costs.

Also, in the present embodiment, since in the metal cylindrical body 31 of the intake manifold 3, the inner space of the metal cylindrical body 31 has the opening cross section area gradually decreasing from the upstream side of an air flow toward the downstream side (from the right side in the X direction toward the left side in FIG. 6), a flow speed of an intake air flowing into the intake air port 1c can be increased. It is accordingly possible to increase combustion efficiency.

Additionally, in the present embodiment, since the metal cylindrical body 31 is configured to have a width larger than that of the resin cylindrical body 32, a further higher supporting rigidity can be ensured at the time of attachment to the cylinder head 1a.

Also, in the present embodiment, since a length of insertion of each of the bolts 34 to 41 (the second fastening members) into the resin cylindrical body 32 at the time of attaching the metal cylindrical body 31 and the resin cylindrical body 32 is set to be larger than a length of insertion (a length of screwing) of the bolts 34 to 41 into the metal cylindrical body 31, even when the resin cylindrical body 32 has lower rigidity than that of the metal cylindrical body 31, high rigidity associated with attachment between the metal cylindrical body 31 and the resin cylindrical body 32 can be maintained.

Additionally, in the present embodiment, since the cylinder bottom surface gradually inclines downward in the vertical direction (the Z direction) from the part of the resin cylindrical body 32 where the intercooler 4 is accommodated toward the end of the metal cylindrical body 31 on the cylinder head 1a side, even when drive of the multi-cylinder engine 1 is stopped and condensed water is generated in the intercooler 4, it is possible to suppress condensed water (water generated due to dew condensation) from remaining in the intake manifold 3.

### [Modifications]

While in the above embodiment, a six-cylinder diesel engine is adopted as one example of a multi-cylinder engine, the present disclosure is not limited thereto. The number of cylinders only needs to be two or more and as a kind of engine, a gasoline engine can be adopted.

While in the above embodiment, the metal cylindrical body 31 and the resin cylindrical body 32 in the intake manifold 3 are both configured to have a cylindrical shape with a generally rectangular transverse section, the present disclosure is not limited thereto. For example, a metal cylindrical body or a resin cylindrical body having an oval transverse section as a whole can be adopted.

While in the above embodiment, parts of the intake air paths 31m to 31r are connected to each other in the metal cylindrical body 31, the present disclosure is not limited thereto. The metal cylindrical body 31 can be configured, for example, to have the intake air paths 31m to 31r completed sectioned therebetween.

Additionally, while the above embodiment adopts the configuration where the metal cylindrical body 31 and the resin cylindrical body 32 are fixed by the fastening members with the opening edges thereof abutted to each other, the present disclosure is not limited thereto. For example, it can be configured such that at least a part of a bottom plate of the metal cylindrical body overlaps a part of a bottom plate of the resin cylindrical body. This enables a fixing strength between the metal cylindrical body and the resin cylindrical body to be increased.

Also, while the above embodiment uses eight bolts 34 to 41 as the second fastening members for fixing the metal cylindrical body 31 and the resin cylindrical body 32, the present disclosure is not limited thereto. For example, seven or less bolts may be used for fixing or nine or more bolts may be used for fixing.

Additionally, as the second fastening member for use in joining the metal cylindrical body 31 and the resin cylindrical body 32, a rivet can be used other than a bolt. For joining the metal cylindrical body 31 and the resin cylindrical body 32, the metal cylindrical body and the resin cylindrical body can be integrated by insert-molding.

Also, while the above embodiment uses seven bolts 7 to 13 as the first fastening members for attaching the metal cylindrical body 31 to the cylinder head la, the present disclosure is not limited thereto. For example, six or less bolts may be used for the attachment or eight or more bolts may be used for the attachment.

Additionally, although the above embodiment does not in particular refer to a metal material forming the metal cylindrical body 31 and resin materials forming the resin cylindrical body 32 and the back cover 33, various materials can be used. An example of resin materials forming the resin cylindrical body 32 and the back cover 33 can include a nylon-based resin material with glass fiber mixed. An example of a metal material forming the metal cylindrical body 31 can include an aluminum alloy.

Also, while in the above embodiment, the EGR paths (the EGR distribution pipe 31a and the EGR branch pipes 31b to 31g) are formed integrally with the metal cylindrical body 31, the present disclosure is not limited thereto. At least either one of the EGR distribution pipe 31a and the EGR branch pipes 31b to 31g can be a body separate from the metal cylindrical body.

Also, while in the above embodiment, the dividing wall 32c is provided at the back side of the resin cylindrical body 32 to space the intake air path 32d and the intake air path 32f from each other, the present disclosure is not limited thereto. For example, it is possible to have no dividing wall or it is conversely possible to provide two or more dividing walls to space three or more intake air paths.

### [Summary of the Present Disclosure]

An intake device for a multi-cylinder engine according to one aspect of the present disclosure includes: an intake manifold attached to a cylinder head of the multi-cylinder engine; an intercooler accommodated in the intake manifold to cool an intake air; and a heat insulation member interposed between the intake manifold and the cylinder head in the multi-cylinder engine.

The intake manifold includes: an intercooler housing that is a cylindrical body formed from a resin material and internally accommodates the intercooler; and an intake air distributor that is a cylindrical body formed of a metal material and has one opening connected to one opening of the intercooler housing, the intake air distributor distributing the intake air.

The heat insulation member is interposed between another opening of the intake air distributor and the cylinder head in the multi-cylinder engine.

According to the above aspect, since the intercooler housing of the intake manifold internally accommodates the intercooler, intake air can be cooled while reducing a size of the engine system and simplifying an intake system layout.

Further, according to the above aspect, since the intercooler housing formed from a resin material is used as a part of the components forming the intake manifold, weight and manufacturing costs can be reduced.

Furthermore, according to the above aspect, the intake air distributor formed of a metal material is used as a part of the components forming the intake manifold, and the metal cylindrical body is disposed on the side of the attachment to the cylinder head of the multi-cylinder engine. Therefore, even when a weight is increased due to accommodation of the intercooler in the intercooler housing, high supporting rigidity can be ensured for the cylinder head.

Furthermore, according to the above aspect, since the heat insulation member is interposed between the cylinder head of the multi-cylinder engine and the intake air distributor of the intake manifold, it is possible to suppress transmission of heat from the cylinder head to the intake manifold, thereby suppressing a temperature increase of an intake air.

Accordingly, the intake device for a multi-cylinder engine according to the above aspect enables a weight increase to be suppressed while accommodating the intercooler, and also enables high supporting rigidity to be ensured at the attachment part to the cylinder head of the multi-cylinder engine.

An intake device for a multi-cylinder engine according to one aspect of the present disclosure includes an intake manifold attached to a cylinder head of the multi-cylinder engine; an intercooler accommodated in the intake manifold to cool an intake air; and a heat insulation member interposed between the intake manifold and the cylinder head in the multi-cylinder engine.

The intercooler is configured to have a columnar external shape extending in a direction of a cylinder row of the multi-cylinder engine.

The intake manifold includes: an intercooler housing that is a cylindrical body formed from a resin material and internally accommodates the intercooler; and an intake air distributor that is a cylindrical body formed of a metal material and has one opening connected to one opening of the intercooler housing, the intake air distributor distributing the intake air.

The heat insulation member is interposed between another opening of the intake air distributor and the cylinder head in the multi-cylinder engine, has a connection path which connects the intake air distributor and an intake air port of the cylinder head, and has a thermal conductivity lower than a thermal conductivity of the intake air distributor.

Also in the above aspect, since the intercooler is accommodated in the intercooler housing of the intake manifold, intake air can be cooled while reducing a size of the engine system and simplifying the intake system layout.

Also in the above aspect, since the intercooler housing formed from a resin material is used as a part of the components forming the intake manifold, weight and manufacturing costs can be reduced.

Also in the above aspect, the intake air distributor formed of a metal material is used as a part of the components forming the intake manifold, and the metal cylindrical body is disposed on the side of the attachment to the cylinder head of the multi-cylinder engine. Therefore, even when a weight is increased due to accommodation of the intercooler in the intercooler housing, high supporting rigidity can be ensured for the cylinder head.

Also in the above aspect, since the heat insulation member is interposed between the cylinder head of the multi-cylinder engine and the intake air distributor of the intake manifold, it is possible to suppress transmission of heat from the cylinder head to the intake manifold, thereby suppressing a temperature increase of an intake air.

Further, according to the above aspect, since the intercooler is adopted which has a columnar external shape extending in the direction of the cylinder row of the multi-cylinder engine, the intercooler as a heavy load can be arranged at a part near the cylinder head as a supporter, thereby suppressing a stress on the cylinder head to be small. Additionally, according to the above aspect, since the present aspect enables a large contact area to be ensured in the connection part between the intercooler housing and the intake air distributor, local heat input can be suppressed.

In the intake device for a multi-cylinder engine according to another aspect of the present disclosure, in the above configuration, the intake air distributor and the heat insulation member are jointly fastened to the cylinder head of the multi-cylinder engine by first fastening members.

According to the above aspect, since the intake air distributor and the heat insulation member are jointly fastened to the cylinder head, high supporting rigidity with respect to the cylinder head can be realized while reducing the number of the first fastening members.

In the intake device for a multi-cylinder engine according to still another aspect of the present disclosure, in the above configuration, the intake air distributor is provided with an EGR path for returning an exhaust gas into an inner space of the intake air distributor.

According to the above aspect, since the intake air distributor of the intake manifold is provided with the EGR (Exhaust Gas Recirculation) path, suppressing an excess increase of a combustion gas temperature enables generation of a nitrogen oxide (NOx) to be suppressed, as well as reducing a pumping loss during air intake.

Also according to the above aspect, since the EGR path is provided in the intake air distributor downstream of the resin cylindrical body in the flow of the intake air, the resin cylindrical body accommodating the intercooler, it is possible to prevent solid matters (soot etc.) contained in the exhaust gas from the EGR path from clogging the intercooler.

In the intake device for a multi-cylinder engine according to yet another aspect of the present disclosure, the EGR path in the intake air distributor includes an EGR distribution path which distributes the exhaust gas to a plurality of parts in a direction of a cylinder row of the multi-cylinder engine.

According to the above aspect, since the EGR path includes the EGR distribution path, the number of parts can be reduced and a layout of the intake device and around the same can be simplified.

Also according to the above aspect, forming the EGR distribution path with a metal material can accelerate reduction in an exhaust gas temperature. Accordingly, a volume of an exhaust gas can be reduced to suppress reduction in air filling efficiency and a loss of a NOx reduction effect caused by EGR.

In the intake device for a multi-cylinder engine according to yet another aspect of the present disclosure, in the above configuration, the intercooler housing is provided with a plurality of intake air paths, and dividing walls for spacing the plurality of intake air paths are formed.

According to the above aspect, since the intercooler housing is provided with the dividing walls to space the plurality of intake air paths from each other, intake air distribution performance can be more excellent.

Further, according to the above aspect, disposition of the dividing wall in the intercooler housing enables rigidity of the intercooler housing to be improved.

In the intake device for a multi-cylinder engine according to yet another aspect of the present disclosure, in the above configuration, the intake manifold further has a back cover attached to the side of the other opening in the intercooler housing so as to cover a part of the other opening in the intercooler housing.

According to the above aspect, since the back cover is attached to the other opening side in the intercooler housing, rigidity of the intercooler housing can be further improved.

Further, according to the above aspect, attaching the back cover as a separate body to the intercooler housing enables the structure of the intercooler housing to be simplified and enables reduction in manufacturing costs.

In the intake device for a multi-cylinder engine according to yet another aspect of the present disclosure, in the above configuration, the inner space of the intake air distributor has an opening cross section area, in a vertical cross section, gradually decreasing from the one opening toward the other opening.

According to the above aspect, since in the intake air distributor, the inner space has the opening cross section area gradually decreasing from the one opening toward the other opening, a flow speed of an intake air flowing into the intake air port can be increased. It is accordingly possible to increase combustion efficiency.

In the intake device for a multi-cylinder engine according to yet another aspect of the present disclosure, when viewed from the direction of the cylinder row of the multi-cylinder engine, a width of the intake air distributor is larger than a width of the intercooler housing.

According to the above aspect, since the intake air distributor is configured to have a width larger than that of the intercooler housing, a further higher supporting rigidity can be ensured at the time of attachment to the cylinder head.

In the intake device for a multi-cylinder engine according to yet another aspect of the present disclosure, in the above configuration, the intercooler housing and the intake air distributor are fastened by second fastening members having a shaft respectively, and in a longitudinal direction of the shaft of the second fastening member, a length of insertion of the shaft of the second fastening member into the intercooler housing is larger than a length of insertion of the shaft of the second fastening member into the intake air distributor.

According to the above aspect, since a length of insertion of the second fastening member into the intercooler housing is set to be larger than a length of insertion of the fastening member into the intake air distributor, even when the intercooler housing has lower rigidity than that of the intake air distributor, high rigidity associated with attachment between the intake air distributor and the intercooler housing can be maintained.

In the intake device for a multi-cylinder engine according to yet another aspect of the present disclosure, in the above configuration, in the intake manifold, a cylinder bottom surface gradually inclines downward in a vertical direction from a part of the intercooler housing where the intercooler is accommodated toward an end of the intake air distributor on a cylinder head side.

According to the above aspect, since the cylinder bottom surface gradually inclines downward in the vertical direction from the part of the resin cylindrical body where the intercooler is accommodated toward the end of the intake air distributor on the cylinder head side, even when drive of the multi-cylinder engine is stopped and condensed water is generated in the intercooler, it is possible to suppress condensed water (water generated due to dew condensation) from remaining in the intake manifold.

As described in the foregoing, the intake device for a multi-cylinder engine according to each of the above aspects enables a weight increase to be suppressed while accommodating the intercooler, and also enables high supporting rigidity to be ensured at the attachment part to the cylinder head of the multi-cylinder engine.

## Claims

1. An intake device for a multi-cylinder engine, the intake device comprising:
an intake manifold attached to a cylinder head of the multi-cylinder engine;
an intercooler accommodated in the intake manifold to cool an intake air; and
a heat insulation member interposed between the intake manifold and the cylinder head in the multi-cylinder engine, wherein
the intake manifold includes:
an intercooler housing that is a cylindrical body formed from a resin material and internally accommodates the intercooler; and
an intake air distributor that is a cylindrical body formed of a metal material and has one opening connected to one opening of the intercooler housing, the intake air distributor distributing the intake air, and
the heat insulation member is interposed between another opening of the intake air distributor and the cylinder head in the multi-cylinder engine.

2. An intake device for a multi-cylinder engine, the intake device comprising:
an intake manifold attached to a cylinder head of the multi-cylinder engine;
an intercooler accommodated in the intake manifold to cool an intake air; and
a heat insulation member interposed between the intake manifold and the cylinder head in the multi-cylinder engine, wherein
the intercooler is configured to have a columnar external shape extending in a direction of a cylinder row of the multi-cylinder engine,
the intake manifold has:
an intercooler housing that is a cylindrical body formed from a resin material and internally accommodates the intercooler; and
an intake air distributor that is a cylindrical body formed of a metal material and has one opening connected to one opening of the intercooler housing, the intake air distributor distributing the intake air, and
the heat insulation member is interposed between another opening of the intake air distributor and the cylinder head in the multi-cylinder engine, has a connection path which connects the intake air distributor and an intake air port of the cylinder head, and has a thermal conductivity lower than a thermal conductivity of the intake air distributor.

3. The intake device for a multi-cylinder engine according to claim 1 or 2, wherein
the intake air distributor and the heat insulation member are jointly fastened to the cylinder head of the multi-cylinder engine by first fastening members.

4. The intake device for a multi-cylinder engine according to any one of claims 1 to 3, wherein
the intake air distributor is provided with an EGR path for returning an exhaust gas into an inner space of the intake air distributor.

5. The intake device for a multi-cylinder engine according to claim 4, wherein
the EGR path in the intake air distributor includes an EGR distribution path which distributes the exhaust gas to a plurality of parts in a direction of a cylinder row of the multi-cylinder engine.

6. The intake device for a multi-cylinder engine according to any one of claims 1 to 5, wherein the intercooler housing is provided with a plurality of intake air paths, and dividing walls for spacing the plurality of intake air paths are formed.

7. The intake device for a multi-cylinder engine according to claim 6, wherein,
the intake manifold further has a back cover attached to the side of the other opening in the intercooler housing so as to cover a part of the other opening in the intercooler housing.

8. The intake device for a multi-cylinder engine according to any one of claims 1 to 7, wherein
the inner space of the intake air distributor has an opening cross section area, in a vertical cross section, gradually decreasing from the one opening toward the other opening.

9. The intake device for a multi-cylinder engine according to any one of claims 1 to 8, wherein
in the direction of the cylinder row of the multi-cylinder engine, a width of the intake air distributor is larger than a width of the intercooler housing.

10. The intake device for a multi-cylinder engine according to any one of claims 1 to 9, wherein
the intercooler housing and the intake air distributor are fastened by second fastening members having a shaft respectively, and
in a longitudinal direction of the shaft of the second fastening member, a length of insertion of the shaft of the second fastening member into the intercooler housing is larger than a length of insertion of the shaft of the second fastening member into the intake air distributor.

11. The intake device for a multi-cylinder engine according to any one of claims 1 to 10, wherein
in the intake manifold, a cylinder bottom surface gradually inclines downward in a vertical direction from a part of the intercooler housing where the intercooler is accommodated toward an end of the intake air distributor on a cylinder head side.
